# FASCICULE DE BREVET EUROPEEN

(11) **EP 2 707 248 B1**
(45) Date de publication et mention de la délivrance du brevet: **22.07.2015**
(21) Numéro de dépôt: 12725072.8
(22) Date de dépôt: 27.04.2012
(51) Int. Cl.: B60N 2/02, B60N 2/225

(54) **ARTICULATION MOTORISEE POUR SIEGE DE VEHICULE**
MOTORISIERTES GELENK FÜR FAHRZEUGSITZ
MOTORIZED ARTICULATION FOR VEHICLE SEAT

(30) Priorité: 13.05.2011 FR 1154146
(43) Date de publication de la demande: 19.03.2014
(73) Titulaire: FAURECIA Sièges d'Automobile, 92000 Nanterre (FR)
(72) Inventeur: NAVATTE, Nicolas, F-61100 Flers (FR); PERA, Thierry, F-90000 Belfort (FR); ALVAREZ, Ignacio, F-91300 Massy (FR); JUDIC, Jean-Marc, F-78470 Saint Remy les Chevreuse (FR)
(74) Mandataire: Cabinet Plasseraud
(86) Numéro de dépôt international: PCT/FR2012/050954
(87) Numéro de publication internationale: WO 2012/156611

(56) Documents cités:
- EP-A1- 1 574 749
- DE-B3-102008 032 162
- FR-A1- 2 880 308
- GB-A- 2 469 280
- US-A- 2 439 999
- US-A- 6 092 431
- US-A1- 2008 150 312
- US-A1- 2010 026 142

## Description

La présente invention est relative aux articulations motorisées pour siège de véhicule.

Elle concerne plus particulièrement un mécanisme d'articulation motorisé reliant une partie du siège à une autre partie du siège, par exemple un dossier de siège à une assise de siège.

Dans l'art antérieur connu, les articulations motorisées comprennent un moteur à courant continu, un réducteur et un mécanisme à hypocycloïde, dont l'un des flasques est par exemple relié au dossier et l'autre flasque est par exemple relié à l'assise. Les vitesses de rotation de tels moteurs sont assez élevées ce qui oblige à avoir des rapports de réduction très importants et ce qui pose un problème quant au bruit de fonctionnement du moteur. De plus, l'encombrement et le poids de tels moteurs sont importants.

Le document GB 2 469 280 A divulgue un mécanisme similaire avec un moteur électrique standard relativement bruyant.

Il est donc apparu un besoin de proposer des ensembles moteur-réducteur permettant une réduction de bruit et/ou une réduction d'encombrement et/ou une réduction de poids.

L'invention propose un mécanisme d'articulation de siège de véhicule, le mécanisme étant adapté pour relier un premier élément de siège à un deuxième élément du siège, le mécanisme comprenant :
- un premier organe destiné à être relié à l'un des premier et deuxième éléments,
- un deuxième organe destiné à être relié à l'autre des premier et deuxième éléments, monté à rotation autour du premier organe selon un axe d'articulation,
- un réducteur disposé entre un organe d'entrée et le deuxième organe, le réducteur ayant un rapport de réduction,
- un moteur ayant un rotor relié solidairement en rotation audit arbre d'entrée du réducteur, pour entrainer la rotation du deuxième organe par rapport au premier organe au travers du réducteur,
caractérisé en ce que le moteur est un moteur piézo-électrique.

Grâce à ces dispositions, il est possible de réduire l'encombrement, et/ou le poids et/ou les bruits de fonctionnement de tels ensembles moteur-réducteur.

Dans divers modes de réalisation de l'invention, on peut éventuellement avoir recours en outre à l'une et/ou à l'autre des dispositions suivante :
- le rapport de réduction du réducteur est supérieur ou égal à 150 et la vitesse de rotation nominale du moteur piézo-électrique est inférieure à 500 tours/min ; moyennant quoi le moteur tourne à régime de rotation plus faible et les bruits de fonctionnement peuvent être réduits ;
- le premier élément est un dossier du siège et le deuxième élément est une assise du siège ;
- le couple maximal du moteur piézo-électrique est supérieur à 1 Newton-mètre ; moyennant quoi le couple est suffisant pour entrainer le mécanisme d'articulation à un régime de rotation inférieur à 500 trs/min ;
- le mécanisme d'articulation comporte en outre un dispositif élastique de rappel, adapté pour appliquer un couple autour de l'axe d'articulation sur le deuxième organe par rapport au premier organe dans une première direction ; moyennant quoi le moteur peut entrainer le mécanisme d'articulation dans les deux sens de rotation, le dispositif élastique de rappel permettant de compenser l'action de la pesanteur ou de la présence d'un utilisateur sur le siège.

Selon un aspect de l'invention, le réducteur peut avoir un étage de réduction unique ; ce qui permet de simplifier le mécanisme et de réduire son encombrement. En outre, dans le mécanisme, le premier organe peut comprendre une première couronne dentée, centrée sur l'axe principal, le deuxième organe peut comprendre une seconde couronne dentée, centrée sur l'axe principal, le réducteur comprend
- un organe d'entrainement guidé en rotation autour de l'axe principal, comprenant un arbre d'entrée et un plateau incliné ayant une normale décalée angulairement par rapport à l'axe principal,
- un organe de transmission intermédiaire ayant un plan arrière en appui glissant contre ledit plateau incliné, une portion avant en appui sur le deuxième organe, une troisième couronne dentée, en prise avec la première couronne dentée, et une quatrième couronne dentée, en prise avec la seconde couronne dentée.

De plus, le nombre de dents de la troisième couronne dentée peut être inférieur au nombre de dents de la première couronne dentée, et le nombre de dents de la quatrième couronne dentée diffère du nombre de dents de la deuxième couronne dentée.

Selon un autre aspect de l'invention, l'arbre rotor et l'organe d'entrée peuvent être formés par une pièce unique ; moyennant le mécanisme peut être simplifié.

Selon encore un autre aspect de l'invention, le réducteur peut avoir un étage de réduction unique comprenant un unique étage hypocycloïde à au moins 250 dents ; moyennant quoi l'encombrement du mécanisme peut être réduit.

Selon un autre aspect de l'invention, le réducteur peut comprendre un premier étage de réduction formé par un réducteur à train planétaire, et un second étage de réduction formé par un mécanisme à hypocycloïde ; moyennant quoi le mécanisme peut utiliser des briques technologiques optimisées.

Selon un autre aspect de l'invention, le réducteur peut comprendre un premier étage de réduction formé par un réducteur à double engrenage, et un second étage de réduction formé par un mécanisme à hypocycloïde ; moyennant quoi l'encombrement du mécanisme peut être optimisé.

L'invention vise également un siège de véhicule comportant un mécanisme d'articulation tel que décrit ci-dessus.

D'autres aspects, buts et avantages de l'invention apparaîtront à la lecture de la description suivante de quatre de ses modes de réalisation, donnés à titre d'exemples non limitatifs à l'aide des dessins joints sur lesquels :
- la figure 1 est une vue en perspective d'une structure de siège comprenant un mécanisme d'articulation selon un premier mode de réalisation de l'invention,
- la figure 2 est un diagramme représentant un moteur et un réducteur dans le mécanisme d'articulation de la figure 1,
- les figures 3 et 4 sont des coupes transversales du mécanisme d'articulation de la figure 1, selon respectivement les lignes III-III et IV-IV de la figure 2,
- la figure 5 est une vue en perspective d'une structure de siège comprenant un mécanisme d'articulation selon un deuxième mode de réalisation de l'invention,
- la figure 6 est un diagramme représentant un moteur et un réducteur dans le mécanisme d'articulation de la Figure 5,
- les figures 7 et 8 sont des coupes transversales du mécanisme d'articulation de la figure 5, selon respectivement les lignes VII-VII et VIII-VIII de la figure 5,
- la figure 9 montre un diagramme représentant un moteur et un réducteur dans un mécanisme d'articulation selon un troisième mode de réalisation de l'invention,
- la figure 10 est une coupe transversale du mécanisme d'articulation de la figure 9, et
- la figure 11 montre un diagramme représentant un moteur et un réducteur dans un mécanisme d'articulation selon un quatrième mode de réalisation de l'invention.

Sur les différentes figures, les mêmes références désignent des éléments identiques ou similaires.

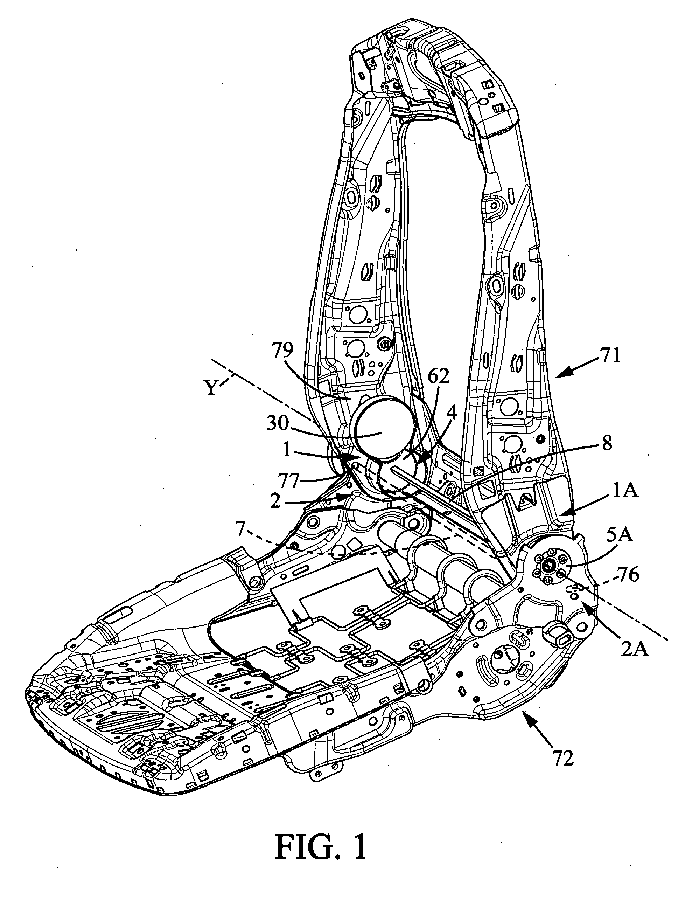

La figure 1 représente une structure de siège comprenant un mécanisme d'articulation selon un premier mode de réalisation de l'invention, la matelassure et le revêtement du siège n'étant pas représentés sur les figures. La structure de siège comprend une assise 72 et un dossier 71 monté sur ladite assise au moyen d'un mécanisme d'articulation permettant la rotation du dossier par rapport à l'assise autour d'un axe d'articulation Y. Dans l'exemple illustré, le mécanisme d'articulation est agencé sur le coté droit du siège mais bien sûr il pourrait être situé du coté opposé.

Le mécanisme d'articulation comprend :
- un premier organe 1 métallique destiné à être relié à l'un des éléments choisis parmi le dossier et l'assise, ici en l'occurrence le dossier 71,
- un deuxième organe 2 métallique destiné à être relié à l'autre des éléments choisis parmi le dossier et l'assise, ici en l'occurrence l'assise 72.

Les premier et deuxième organes 1,2 sont montés sensiblement pivotants l'un par rapport à l'autre, selon l'axe d'articulation Y, le mouvement pouvant comprendre une légère composante cycloïde comme il sera vu plus loin.

Le mécanisme d'articulation comprend en outre un moteur piézo-électrique 30 et un réducteur 4 pour entrainer la rotation du deuxième organe 2 par rapport au premier organe 1. Le moteur piézo-électrique 30 présente un stator et un rotor 10 destiné à être relié à un organe d'entrée 11 du réducteur, pour entrainer la rotation du deuxième organe 2 par rapport au premier organe 1 au travers dudit réducteur 4, la vitesse de rotation nominale dudit moteur piézo-électrique étant inférieure à 500 tours/min. De préférence, on pourra choisir un moteur piézo-électrique avec une vitesse de rotation nominale aux alentours de 200 tours/min, et optimalement 180 tours/min.

Le réducteur 4 est disposé entre le moteur piézo-électrique 30 et le deuxième organe 2 ; le réducteur 4 a un rapport de réduction de préférence supérieur ou égal à 150.

Avantageusement selon l'invention, le couple maximal du moteur piézo-électrique 30 est supérieur à 1 Newton-mètre. Un tel couple est supérieur à celui habituellement connus pour les moteurs usuels pour ces applications. Pour une puissance donnée, l'augmentation du couple permet d'abaisser la vitesse de rotation, et ainsi réduire potentiellement le bruit généré, tout au moins les fréquences élevées. Un tel moteur piézo-électrique 30 est utilisé dans tous les modes de réalisation qui sont décrits plus en détail ci après.

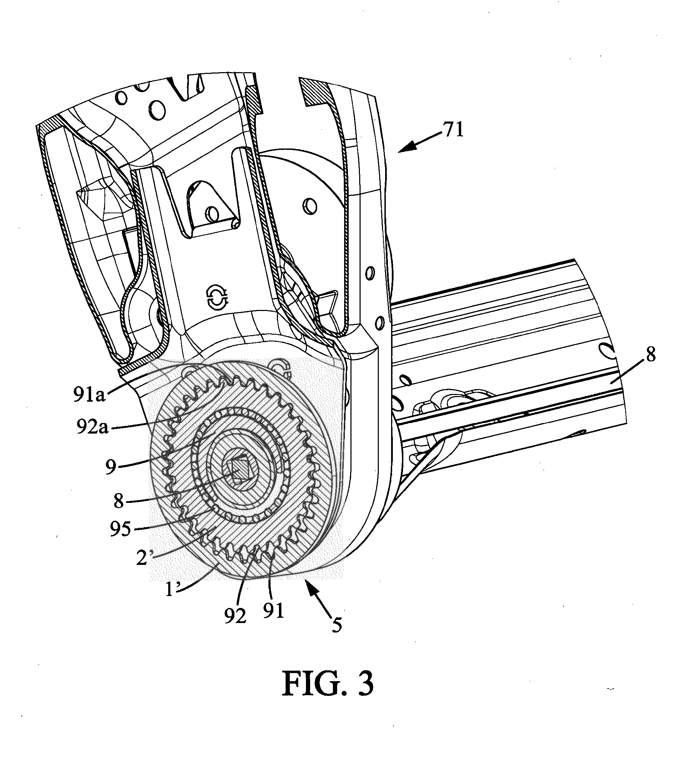

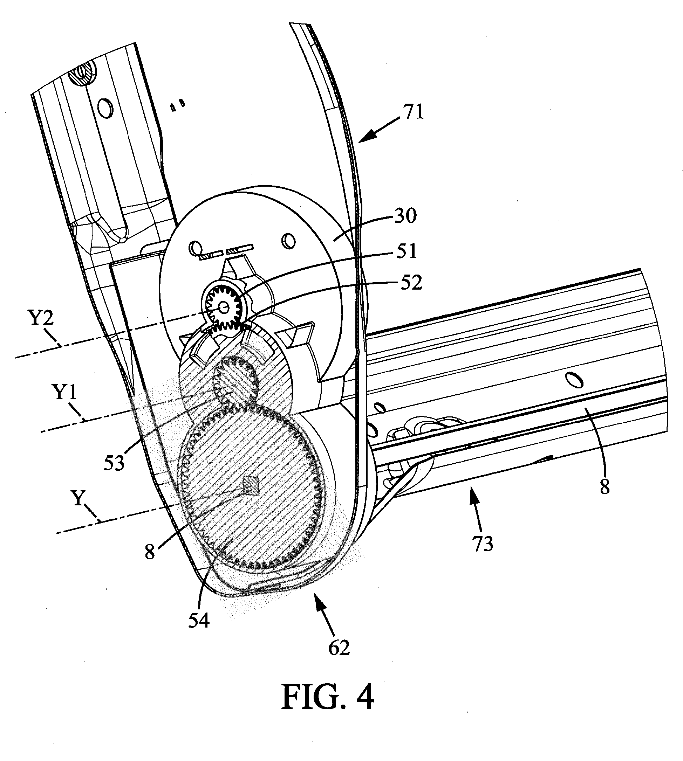

Selon un premier mode de réalisation, illustré aux figures 1 à 4, le moteur piézo-électrique 30 et le réducteur 4 sont agencés dans une zone interne 79 de l'armature de dossier qui leur sert d'embase.

Le réducteur 4 comprend un premier étage de réduction formé par un réducteur à double engrenage 62, et un second étage de réduction formé par un mécanisme à hypocycloïde 5.

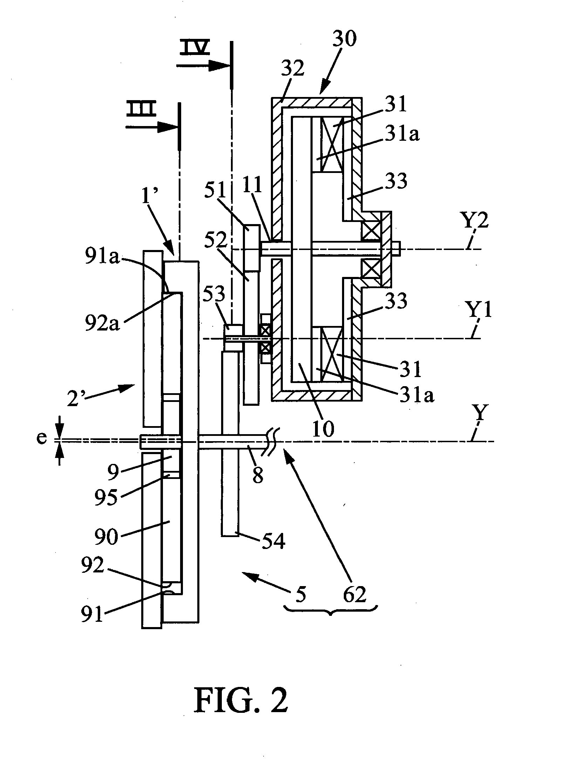

Comme représentés aux Figures 2, 3 et 4, le moteur 30 comprend un carter 32, lié au premier organe, une carte électronique 33 et un équipement stator 31, capable d'impulser un mouvement de rotation à un rotor 10 grâce à la création d'ondes mécaniques de forme prédéterminée créées pas des éléments piezo-électriques 31a disposés circulairement en vis-à-vis du rotor 10. Le rotor 10 tourne autour d'un axe Y2 parallèle à l'axe d'articulation Y et est couplé à un organe d'entrée 11 du réducteur, en particulier du premier étage de réduction 62.

Ce premier étage de réduction 62 se présente dans l'exemple illustré comme une succession de deux engrenages parallèles, avec un premier pignon 51 de faible diamètre, solidaire de l'organe d'entrée 11 ; ce premier pignon 51 d'axe Y2 entraine un deuxième pignon 52 de plus grand diamètre de sorte qu'une réduction de la vitesse de rotation en résulte, par exemple dans un rapport voisin de 3. Le second pignon 52 est centré sur un axe Y1 parallèle à l'axe d'articulation Y et est rigidement couplé à un troisième pignon 53 de petit diamètre qui entraine à son tour un quatrième pignon 54 de plus grand diamètre, solidaire en rotation d'un arbre de commande 8, et tournant autour de l'axe d'articulation Y.

Le premier étage de réduction présente par exemple un rapport de réduction de 3 x 3 = 9.

Selon une variante, un ou deux réducteurs à courroie pourraient être utilisés en lieu et place des réducteurs à pignons parallèles décrits ci-dessus.

L'arbre de commande 8 représente la sortie du premier étage de réduction 62 et l'entrée du deuxième étage de réduction formé par le mécanisme à hypocycloïde 5. Ce mécanisme à hypocycloïde 5 comprend :
- un premier flasque 1' métallique qui peut être confondu avec le premier organe 1 ou lié rigidement avec le premier organe 1, ce premier flasque 1' ayant une denture circulaire intérieure 91,
- un deuxième flasque 2' métallique qui peut être confondu avec le deuxième organe 2 ou lié rigidement avec le deuxième organe 2, ce deuxième flasque 2' comprenant un disque 90 ayant une denture circulaire extérieure 92 s'engageant dans la denture circulaire intérieure 91 du premier flasque 1', et la denture circulaire extérieure de ce deuxième flasque 2' ayant un diamètre inférieur au diamètre de la denture circulaire intérieure du premier flasque, par exemple avec un nombre de dents inférieur d'une unité,
- une came excentrique 9 reliée en rotation à l'arbre de commande 8, impulsant un mouvement d'hypocycloïde au deuxième flasque 2' de sorte que, à chaque instant, une portion 91a de la denture intérieure 91 est en prise avec une portion correspondante 92a de la denture extérieure 92.

A chaque fois que la came 9 fait un tour complet, le deuxième flasque 2' se décale d'une dent par rapport au premier flasque 1'. Si la came tourne en sens opposé, le deuxième flasque 2' se décale en sens opposé d'une dent par rapport au premier flasque 1'.

L'excentrique 'e' de la came 9 correspond sensiblement à la différence de diamètre médian des dentures susmentionnées 91,92.

Dans l'exemple illustré, la denture circulaire intérieure 91 possède 34 dents la denture circulaire extérieure 92 possède 33 dents ; il en résulte un rapport de réduction du mécanisme à hypocycloïde 5 d'une valeur de 34.

Ainsi, pour l'ensemble du réducteur, on obtient un rapport de réduction R égal à 34 multiplié par 9 soit 306, et donc en particulier R>150.

Il est ainsi obtenu des déplacements angulaires du dossier avec une vitesse angulaire comprise entre 2 et 6 degrés par seconde.

Dans l'exemple illustré, un dispositif de roulement 95 de type roulement à rouleaux est interposé entre la came 9 et le disque 90.

En outre, le mécanisme d'articulation peut comprendre un dispositif élastique de rappel 7, adapté pour appliquer un couple autour de l'axe d'articulation Y sur le deuxième organe 2 par rapport au premier organe 1 dans une première direction. Ce dispositif élastique de rappel 7 se présente dans l'exemple illustré comme une barre de torsion ancrée sur une de ses extrémités 75 dans un orifice 77 du premier organe 1 et fixée à son extrémité opposée 76 au deuxième organe 2A dans un autre orifice 78, le deuxième organe 2A gauche étant relié au deuxième organe 2 (coté droit) au travers de l'armature de siège 71. Le dispositif élastique de rappel 7 pourrait aussi se présenter comme un ressort, par exemple spiral, interposé directement entre le premier organe 1 et le deuxième organe 2, agencé sur le coté droit du siège. Toute solution permettant d'appliquer un couple de rappel entre le premier organe 1 et le deuxième organe 2, directement ou indirectement, peut convenir et est visée par la présente invention.

Dans l'exemple illustré, le dispositif élastique de rappel 7 exerce un couple tendant à pousser le dossier vers l'avant du siège, couple qui s'ajoute à celui issu du moteur notamment dans le cas d'une rotation du dossier vers l'avant avec un utilisateur sur le siège qui a tendance naturellement à exercer un effort vers l'arrière.

De plus, lorsque le dossier est incliné de façon significative vers l'arrière, la gravité intervient pour donner un couple tendant à faire tourner le dossier vers l'arrière encore plus. Le dispositif élastique de rappel 7 exerce un couple opposé, qui peut varier de façon croissante avec l'inclinaison du siège pour compenser les effets de la pesanteur. Une légère précontrainte vers l'avant peut être prévue pour la position sensiblement verticale du dossier.

En l'absence de commande sur le moteur 30, les premier et deuxième organes 1,2 sont immobilisés l'un par rapport à l'autre en raison de l'irréversibilité du mécanisme. En effet, le mécanisme à hypocycloïde 5 ne permet pas à un couple s'exerçant sur sa sortie de créer un effort et un couple suffisant pour faire tourner la came 9 ; l'irréversibilité est ainsi assurée, et les premier et deuxième flasques 1',2' ne peuvent pas tourner l'un par rapport à l'autre de sorte que les premier et deuxième organes 1,2 ne peuvent bouger l'un par rapport à l'autre que si le moteur est commandé, même dans le cas d'accélération importante ou de choc subi par le véhicule.

Il est à noter que dans ce premier mode, le premier flasque l'est lié au dossier 71 et le deuxième flasque 2' est lié à l'assise 72. Par rapport à la position de l'assise, en raison du mouvement d'hypocycloïde relatif du premier flasque par rapport au second flasque, à chaque tour de la came 9, l'axe Y se déplace selon un cercle dont le rayon est égal à l'excentricité 'e' de la came, mais ce mouvement, subi par le dossier, est de faible ampleur.

Toujours selon ce premier mode de réalisation, il peut y avoir un mécanisme d'articulation auxiliaire 5A agencé au niveau du coté opposé du siège donc le coté gauche dans l'exemple représenté. Ce mécanisme d'articulation auxiliaire 5A est plus simple que celui décrit ci-dessus, car il comporte simplement un mécanisme à hypocycloïde 5A, ce dernier étant similaire ou identique à celui qui a été décrit. Ledit mécanisme à hypocycloïde 5A est centré sur Y et est commandé par un prolongement de l'arbre de commande 8, de façon synchrone avec le mécanisme à hypocycloïde principal 5 agencé coté droite dans l'exemple illustré.

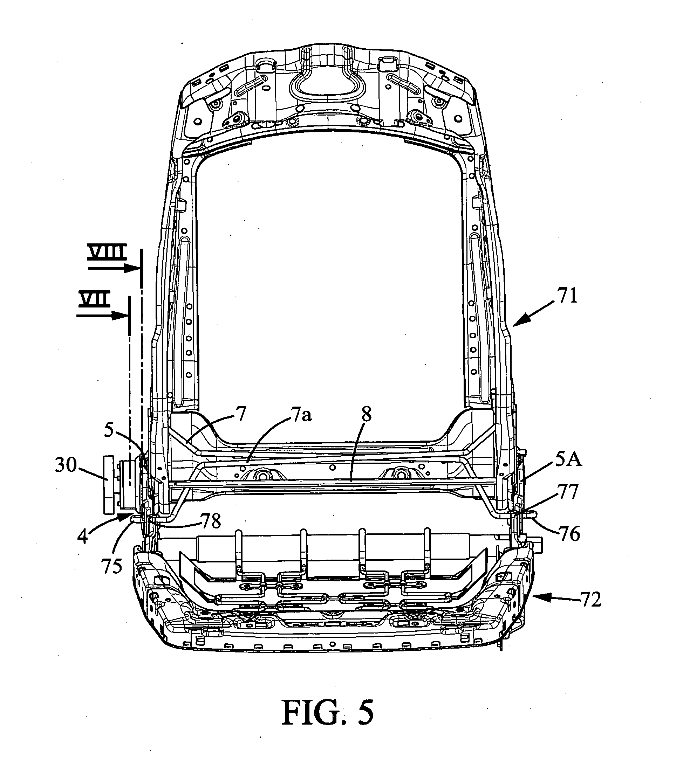

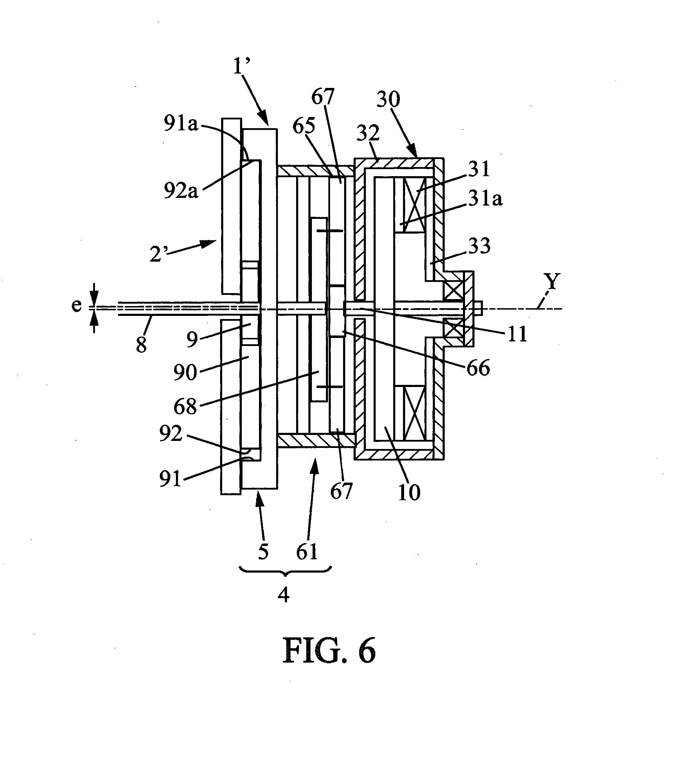

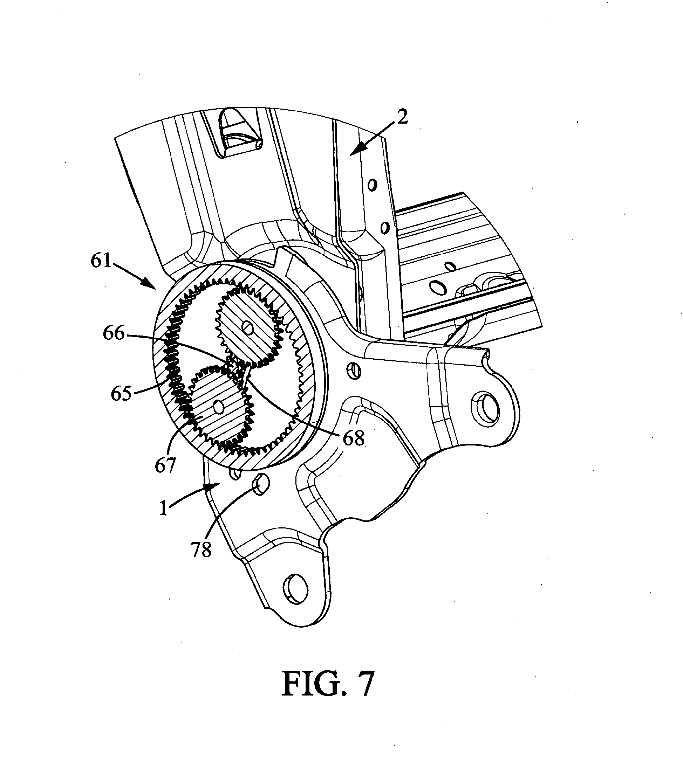

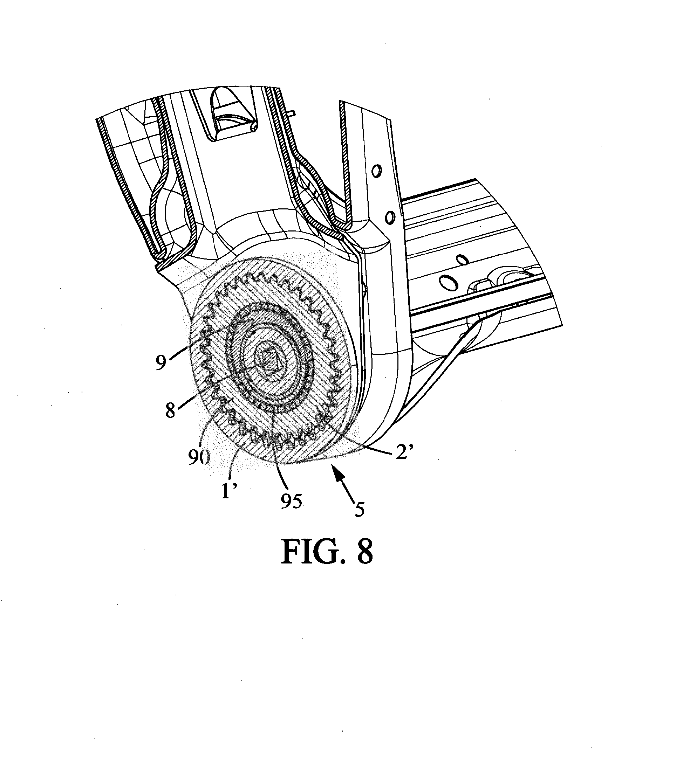

Selon un deuxième mode de réalisation de l'invention (Figures 5 à 8), le moteur piézo-électrique 30 et le réducteur 4 sont agencés dans une zone externe de l'armature de l'assise, faisant saillie coté droit vers l'extérieur en s'étendant concentriquement à l'axe Y.

Le réducteur 4 comprend un premier étage de réduction formé par un réducteur à train planétaire 61, et un second étage de réduction formé par un mécanisme à hypocycloïde 5, ce dernier étant similaire ou identique à celui qui a été décrit pour le premier mode. De même, le moteur piézo-électrique 30 est similaire ou identique à celui qui a été décrit pour le premier mode et par conséquent la description détaillée de ces éléments ne sera pas reprise ici.

Concernant le réducteur à train planétaire 61, celui-ci comprend, comme il est connu dans l'art, un pignon central 66 entraineur, qui engraine sur des pignons satellites 67, ceux-ci étant portés par un porte satellite 68, les satellites étant engagés sur un couronne ayant une denture périphérique 65. Le rapport de réduction du réducteur à train planétaire 61 peut être par exemple compris entre 6 et 12, et de préférence voisin de 10.

Il est à noter que dans ce deuxième mode, le premier flasque l'est lié à l'assise 72 et le deuxième flasque 2' est lié au dossier 71. Par rapport à la position de l'assise, en raison du mouvement d'hypocycloïde relatif du premier flasque par rapport au second flasque, à chaque tour de la came 8, l'axe Y reste immobile, mais le centre du deuxième flasque 2' se déplace selon un cercle dont le rayon est égal à l'excentricité 'e' de la came, mais ce mouvement, subi par le dossier, est de faible ampleur. Le rapport de réduction R vaut donc alors 10 multiplié par 34, à savoir 340.

Toujours selon ce deuxième mode de réalisation, il peut également y avoir un mécanisme d'articulation auxiliaire 5A agencé au niveau du coté opposé du siège, commandé par l'arbre de commande 8 qui s'étend d'un coté à l'autre.

En outre, dans une variante non représentée, l'arbre de commande 8 peut passer au travers du moteur 30 lorsque celui-ci se situe dans l'espace intérieur de l'armature.

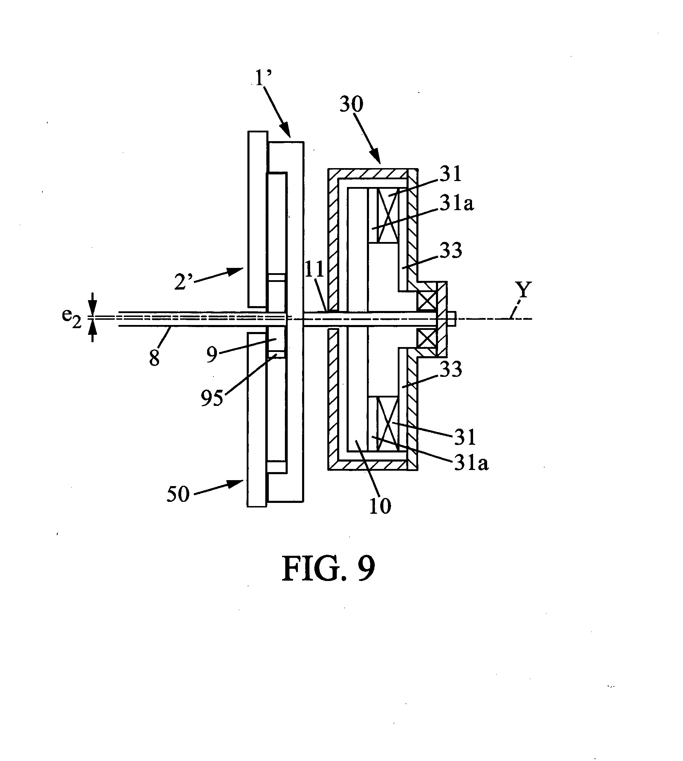

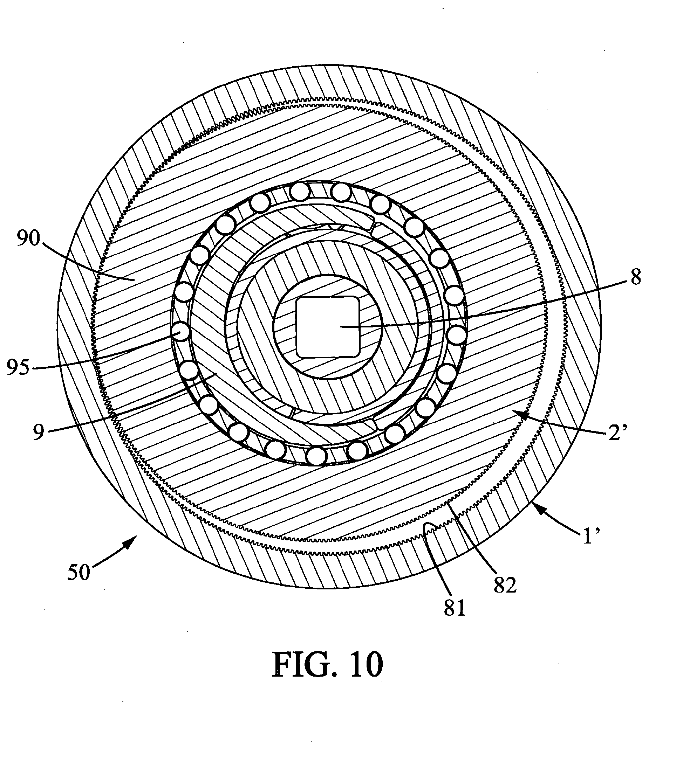

Selon un troisième mode de réalisation de l'invention (Figures 9 à 10), le moteur piézo-électrique 30 est similaire ou identique à la description précédente. En revanche, le réducteur 4 comprend un réducteur ayant un étage de réduction unique. Dans ce mode, le rotor 10 est directement couplé à l'arbre de commande 8 qui entraine la came 9 d'un mécanisme à hypocycloïde 50 similaire dans son principe à celui déjà décrit.

Toutefois, dans l'exemple illustré, la denture intérieure 81 du premier flasque comprend 330 dents et la denture extérieure 82 du second flasque 2' comprend 329 dents. A chaque fois que la came 9 fait un tour, le second flasque 2' se décale angulairement d'une dent par rapport au premier flasque. Au lieu d'une dent, cela peut être aussi un décalage de quelques dents.

Toujours selon ce troisième mode de réalisation, il peut également y avoir un mécanisme à hypocycloïde auxiliaire agencé au niveau du coté opposé du siège, commandé de façon synchronisé par l'arbre de commande 8 qui s'étend d'un coté à l'autre. Ce mécanisme à hypocycloïde auxiliaire comprend des dentures avec un nombre de dents identique par rapport au mécanisme à hypocycloïde 50 décrit ci-dessus pour le troisième mode.

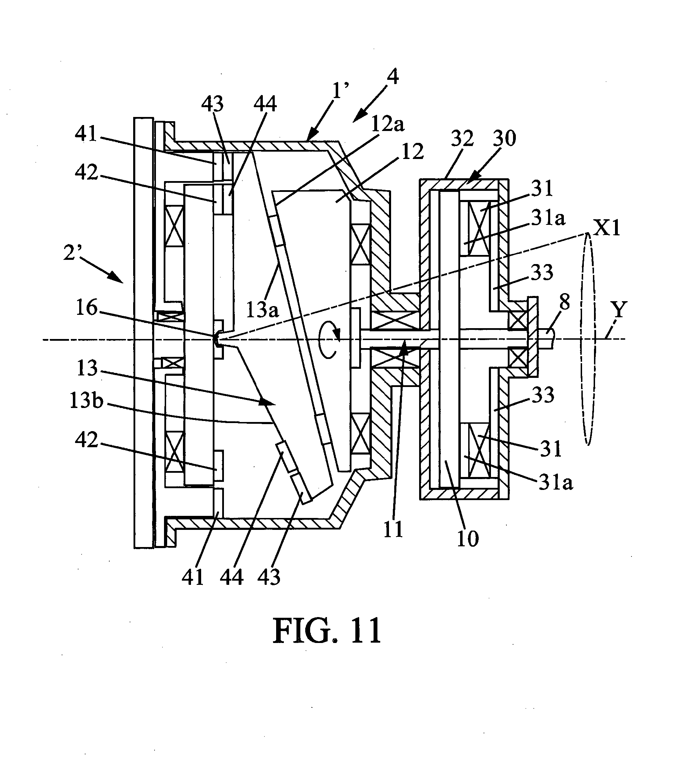

Selon un quatrième mode de réalisation de l'invention, illustré à la Figure 11, le moteur piézo-électrique 30 est similaire ou identique à la description précédente, mais le réducteur 4 comprend un étage de réduction unique spécifique, aussi appelé 'réducteur à plan incliné', qui va être décrit ci-après.

Le premier organe 1 comprend une première couronne dentée 41, centrée sur l'axe principal d'articulation Y, le sommet des dents étant perpendiculaire à l'axe principal Y.

Le deuxième organe 2 comprend une seconde couronne dentée 42, centrée sur l'axe principal Y, et parallèle à la première couronne dentée 41.

Le réducteur comprend :
- un organe d'entrainement 12 guidé en rotation autour de l'axe principal Y, comprenant un arbre d'entrée 11 et un plateau incliné 12a ayant une normale X1 décalée angulairement par rapport à l'axe principal,
- un organe de transmission intermédiaire 13 ayant un plan arrière 13a en appui glissant contre ledit plateau incliné, une portion avant de forma tronconique centrée sur X1, en appui sur le deuxième organe au moyen d'une liaison rotule 16, une troisième couronne dentée 43, en périphérie de la forme tronconique, en prise avec la première couronne dentée 41, et une quatrième couronne dentée 44 adjacente à la troisième couronne dentée 43, en prise avec la seconde couronne dentée 42.

Lorsque le rotor du moteur tourne, il entraine en rotation l'organe d'entrainement 12 et la normale X1 de celui-ci tourne autour de l'axe Y.

Selon une disposition particulièrement préférée, le nombre de dents de la troisième couronne dentée 43 est inférieur au nombre de dents de la première couronne dentée 41. De la sorte, lorsque l'organe d'entrainement 12 fait un tour complet, l'organe de transmission intermédiaire 13 se décale angulairement par rapport au carter d'une ou plusieurs dents selon la différence du nombre de dents et ceci selon une première direction angulaire.

De plus, le nombre de dents de la quatrième couronne dentée 44 diffère du nombre de dents de la deuxième couronne dentée 42. De la sorte, lorsque l'organe de transmission intermédiaire 13 fait un tour complet, l'organe de transmission intermédiaire 13 se décale angulairement d'une ou plusieurs dents selon la différence du nombre de dents et ceci par exemple selon une direction angulaire, qui peut être identique ou opposée à la première.

Il est possible alors d'obtenir un rapport de réduction R très important, par exemple avec un nombre de dents respectif de 20 et 19 pour les première et troisième couronnes dentées 41,43 et un nombre de dents respectif de 17 et 16 pour les deuxième et quatrième couronnes dentées 42,44, ce qui donne un rapport de réduction de 340.

Avantageusement selon un aspect de l'invention, l'arbre rotor 10 et l'arbre d'entrée 11 peuvent être formés par une pièce unique.

Toujours selon ce quatrième mode de réalisation, il peut également y avoir un second 'réducteur à plan incliné' agencé du coté opposé et commandé de façon synchronisé par l'arbre de commande 8 qui s'étend d'un coté à l'autre.

Il est à noter que le mécanisme d'articulation auxiliaire 5A agencé au niveau du coté opposé du siège est optionnel et pourrait se réduire à une simple liaison pivot.

Il est aussi à noter que le mécanisme d'articulation décrit ci-dessus n'est pas limité à l'application de l'articulation du dossier et peut être utilisé en prenant comme élément de siège par exemple l'assise par rapport à l'embase et dans ce cas, c'est le mouvement de rehausse qui est visé ; il peut aussi être utilisé pour faire pivoter un élément comme le nez d'assise par rapport à l'assise elle-même ou tout autre élément mobile du siège.

Bien entendu, un moteur piézo-électrique suppose la présence d'une unité de commande électronique, qui est par exemple présente sur la carte électronique 33 ; de plus le mécanisme peut comprendre un capteur, par exemple de type effet hall, adapté pour capter la position et/ou la vitesse du rotor. L'unité de commande électronique peut utiliser les informations provenant du capteur pour piloter l'équipement stator 31.

Il est également à noter que l'utilisation d'un moteur piezo-électrique permet de réduire les niveaux de pollution électromagnétique par rapport à une solution à moteur à courant continu.

## Revendications

1. **Mécanisme d'articulation** de siège de véhicule, le mécanisme étant adapté pour relier un premier élément (71) formé par un dossier du siège à un deuxième élément (72) formé par une assise du siège, le mécanisme comprenant :
- un **premier organe** (1) destiné à être relié à l'un des premier et deuxième éléments (71,72),
- un **deuxième organe** (2) destiné à être relié à l'autre des premier et deuxième éléments (71,72), monté **à rotation** autour du premier organe (1) selon un axe d'articulation (Y).
- un **réducteur** (4) disposé entre un organe d'entrée (11) et le deuxième organe (2), le réducteur ayant un rapport de réduction,
- un **moteur** (30) ayant un rotor (10) relié solidairement en rotation audit organe d'entrée (11) du réducteur, pour entrainer la rotation du deuxième organe par rapport au premier organe au travers du réducteur,
**caractérisé en ce que** le moteur est un moteur **piézo-électrique.**

2. Mécanisme d'articulation selon la revendication 1, dans lequel le **rapport de réduction** du réducteur est supérieur ou égal à 150, dans lequel la vitesse de rotation nominale du moteur piézo-électrique est inférieure à 500 tours/min.

3. Mécanisme d'articulation selon l'une des revendications 1 ou 2, dans lequel le **couple maximal** du moteur piézo-électrique est supérieur à 1 Newton-mètre.

4. Mécanisme d'articulation selon l'une des revendications 1 à 3, comportant en outre un **dispositif élastique de rappel** (7), adapté pour appliquer un couple autour de l'axe d'articulation (Y) sur le deuxième organe (2) par rapport au premier organe (1) dans une première direction.

5. Mécanisme d'articulation selon l'une des revendications 1 à 4, dans lequel le réducteur a un **étage de réduction unique.**

6. Mécanisme d'articulation selon l'une des revendications 1 à 5 dans lequel :
- le premier organe (1) comprend une première couronne dentée (41), centrée sur l'axe principal (Y),
- le deuxième organe (2) comprend une seconde couronne dentée (42), centrée sur l'axe principal (Y),
- le réducteur comprend :
. un organe d'entrainement guidé en rotation autour de l'axe principal (Y), comprenant un arbre d'entrée (11) et un plateau incliné (12) ayant une normale (X1) décalée angulairement par rapport à l'axe principal,
. un organe de transmission intermédiaire (13) ayant un plan arrière (13a) en appui glissant contre ledit plateau incliné, une portion avant en appui sur le deuxième organe, une troisième couronne dentée (43), en prise avec la première couronne dentée, et une quatrième couronne dentée (44), en prise avec la seconde couronne dentée.

7. Mécanisme d'articulation selon la revendication 6, dans lequel le nombre de dents de la troisième couronne dentée (43) est inférieur au nombre de dents de la première couronne dentée (41), et le nombre de dents de la quatrième couronne dentée (44) diffère du nombre de dents de la deuxième couronne dentée(42).

8. Mécanisme d'articulation selon la revendication 6, dans lequel l'arbre rotor et l'arbre d'entrée sont formés par une pièce unique.

9. Mécanisme d'articulation selon la revendication 5, dans lequel le réducteur a un étage de réduction unique comprenant un unique **étage hypocycloïde** à au moins 250 dents.

10. Mécanisme d'articulation selon l'une des revendications 1 à 4, dans lequel le réducteur (4) comprend un **premier étage** de réduction formé par un réducteur à **train planétaire** (61), et un **second étage** de réduction formé par un mécanisme à hypocycloïde (5).

11. Mécanisme d'articulation selon l'une des revendications 1 à 4, dans lequel le réducteur (4) comprend un premier étage de réduction formé par un réducteur à **double engrenage** (62), et un second étage de réduction formé par un mécanisme à hypocycloïde (5).

12. Siège pour véhicule automobile comprenant un mécanisme d'articulation selon l'une des revendications précédentes.

## Patentansprüche

1. Gelenkmechanismus für einen Fahrzeugsitz, wobei der Mechanismus geeignet ist, ein erstes Element (71), das von einer Rückenlehne des Sitzes gebildet wird, mit einem zweiten Element (72), das von einer Sitzfläche des Sitzes gebildet wird, zu verbinden, wobei der Mechanismus aufweist:
- ein an eines der beiden Elemente (71,72) anzubringendes erstes Glied (1),
- ein an das andere der beiden Elemente (71,72) anzubringendes zweites Glied (2), wobei das zweite Glied (2) bezüglich des ersten Glieds (1) um eine Gelenkachse (Y) drehbar ist;
- ein Reduktionsgetriebe (4), das zwischen einem Eingangsglied (11) und dem zweiten Glied (2) angeordnet ist und ein Übersetzungsverhältnis hat,
- einen Motor (30) mit einem Rotor (10), der mit dem Eingangsglied (11) des Reduktionsgetriebes drehfest gekoppelt ist, um über das Reduktionsgetriebe die Drehung des zweiten Glieds bezüglich des ersten Glieds anzutreiben,
**dadurch gekennzeichnet, dass** der Motor ein piezoelektrischer Motor ist.

2. Gelenkmechanismus nach Anspruch 1, wobei das Übersetzungsverhältnis des Reduktionsgetriebes größer oder gleich 150 ist, wobei die nominale Drehgeschwindigkeit des piezoelektrischen Motors kleiner als 500 Umdrehungen/Minute ist.

3. Gelenkmechanismus nach einem der Ansprüche 1 oder 2, wobei das maximale Drehmoment des piezoelektrischen Motors größer als 1 Newtonmeter ist.

4. Gelenkmechanismus nach einem der Ansprüche 1 bis 3, ferner mit einer elastischen Rückstellvorrichtung (7), die ein Drehmoment um die Gelenkachse (Y) auf das zweite Glied (2) bezüglich des ersten Glieds (1) in eine erste Richtung anlegen kann.

5. Gelenkmechanismus nach einem der Ansprüche 1 bis 4, wobei das Reduktionsgetriebe ein einstufiges Reduktionsgetriebe ist.

6. Gelenkmechanismus nach einem der Ansprüche 1 bis 5, wobei:
- das erste Glied (1) einen bezüglich der Hauptachse (Y) zentrierten ersten Zahnkranz (41) aufweist,
- das zweite Glied (2) einen bezüglich der Hauptachse (Y) zentrierten zweiten Zahnkranz (42) aufweist,
- das Reduktionsgetriebe aufweist:
▪ ein um die Hauptachse (Y) drehend geführtes Antriebsglied, das eine Eingangswelle (11) und eine geneigte Platte (12) aufweist, deren Normale (X1) einen Winkel mit der Hauptachse bildet,
▪ ein Übersetzungszwischenglied (13) mit einer gleitend an der geneigten Platte anliegenden hinteren Ebene (13a), einem an dem zweiten Glied anliegenden vorderen Abschnitt, einem dritten Zahnkranz (43) im Eingriff mit dem ersten Zahnkranz und einem vierten Zahnkranz (44) im Eingriff mit dem zweiten Zahnkranz.

7. Gelenkmechanismus nach Anspruch 6, wobei die Anzahl der Zähne des dritten Zahnkranzes (43) kleiner als die Anzahl der Zähne des ersten Zahnkranzes (41) ist und die Anzahl der Zähne des vierten Zahnkranzes (44) sich von der Anzahl der Zähne des zweiten Zahnkranzes (42) unterscheidet.

8. Gelenkmechanismus nach Anspruch 6, wobei die Rotorwelle und die Eingangswelle aus einem einzigen Stück gebildet sind.

9. Gelenkmechanismus nach Anspruch 5, wobei das Reduktionsgetriebe ein einstufiges Reduktionsgetriebe ist, das ein einstufiges Hypozykloiden-Getriebe mit mindestens 250 Zähnen aufweist.

10. Gelenkmechanismus nach einem der Ansprüche 1 bis 4, wobei das Reduktionsgetriebe (4) eine aus einem Planetengetriebezug (62) gebildete erste Reduktionsstufe und eine aus einem Hypozykloiden-Mechanismus (5) gebildete zweite Reduktionsstufe hat.

11. Gelenkmechanismus nach einem der Ansprüche 1 bis 4, wobei das Reduktionsgetriebe eine von einem Doppelrad-Reduktionsgetriebe (62) gebildete erste Reduktionsstufe und eine von einem Hypozykloiden-Mechanismus (5) gebildete zweite Reduktionsstufe hat.

12. Sitz für ein Automobilfahrzeug, der einen Gelenkmechanismus nach einem der vorstehenden Ansprüche aufweist.

## Claims

1. Hinge mechanism for vehicle seat, the mechanism being adapted for connecting a first element (71) formed as a backrest of the seat to a second element (72) formed as a seat portion of the seat, the mechanism comprising:
- a first member (1) for connection to one of said first and second elements (71,72),
- a second member (2) for connection to the other of the first and second elements (71,72), mounted to rotate about the first member (1) on a hinge axis (Y),
- a reduction gearing (4) arranged between an input member (11) and the second member (2), said reduction gearing having a reduction ratio,
- a motor (30) having a rotor (10) rotatably secured to said input member (11) of the reduction gearing, for driving the rotation of the second member relative to the first member through the reduction gearing,
**characterized by** the motor being a piezoelectric motor.

2. Hinge mechanism according to claim 1, wherein the reduction ratio of the reduction gearing is greater than or equal to 150, and wherein the rated rotational speed of the piezoelectric motor is less than 500 revolutions/min.

3. Hinge mechanism according to one of claims 1 or 2, wherein the maximum torque of the piezoelectric motor is greater than 1 Newton-meter.

4. Hinge mechanism according to one of claims 1 to 3, further comprising an elastic biasing means (7) adapted for applying torque in a first direction, about the hinge axis (Y), to the second member (2) relative to the first member (1) .

5. Hinge mechanism according to one of claims 1 to 4, wherein the reduction gearing has a single reduction stage.

6. Hinge mechanism according to one of claims 1 to 5, wherein:
- the first member (1) comprises a first ring gear (41), centered on the main axis (Y),
- the second member (2) comprises a second ring gear (42), centered on the main axis (Y),
- the reduction gearing comprises:
. a drive member (12) rotationally guided about the main axis (Y), comprising an input shaft (11) and an inclined plane (12a) having a normal (X1) that is angularly offset relative to the main axis,
. an intermediate transmission member (13) having a rear plane (13a) in sliding contact with said inclined plane, a front portion supported by the second member, a third ring gear (43) engaging with the first ring gear, and a fourth ring gear (44) engaging with the second ring gear.

7. Hinge mechanism according to claim 6, wherein the number of teeth of the third ring gear (43) is less than the number of teeth of the first ring gear (41), and the number of teeth of the fourth ring gear (44) differs from the number of teeth of the second ring gear (42).

8. Hinge mechanism according to claim 6, wherein the rotor shaft and the input shaft are formed of a single piece.

9. Hinge mechanism according to claim 5, wherein the reduction gearing has a single reduction stage comprising a single hypocycloid stage of at least 250 teeth.

10. Hinge mechanism according to one of claims 1 to 4, wherein the reduction gearing (4) comprises a first reduction stage formed of a planetary gear train (61), and a second reduction stage formed of a hypocycloid mechanism (5).

11. Hinge mechanism according to one of claims 1 to 4, wherein the reduction gearing (4) comprises a first reduction stage formed of double reduction gearing (62), and a second reduction stage formed of a hypocycloid mechanism (5).

12. Motor vehicle seat comprising a hinge mechanism according to one of the preceding claims.
